Europäisches Patentamt

(19) European Patent Office

Office européen des brevets

(11) Publication number: **0 008 176**
**B1**

(12) **EUROPEAN PATENT SPECIFICATION**

(45) Date of publication of patent specification: **12.01.83**

(51) Int. Cl.³: **C 02 F 3/02, F 24 J 3/04**

(21) Application number: **79301491.1**

(22) Date of filing: **26.07.79**

(54) **A method of recovering heat from waste water in a purifying plant and a purifying plant for carrying out the method.**

(30) Priority: **31.07.78 DK 3388/78**

(43) Date of publication of application:
**20.02.80 Bulletin 80/4**

(45) Publication of the grant of the patent:
**12.01.83 Bulletin 83/2**

(84) Designated Contracting States:
**AT BE CH DE FR GB NL SE**

(56) References cited:
**DE - A - 1 459 488**
**DE - A - 2 407 047**
**DE - A - 2 552 753**
**FR - A - 2 213 237**
**US - A - 3 442 386**

**HEATING PIPING AND AIR CONDITIONING, vol. 47, no. 2, 1975, pages 23—27, Stamford, U.S.A.**
**T. Pannkoke: "The Heat Pump"**

(73) Proprietor: **BURMEISTER & WAIN SCANDINAVIAN CONTRACTOR A/S Refshaleöen**
**DK-1433 Copenhagen K (DK)**

(72) Inventor: **Petersen, Benny**
**No. 10 Ellehegnet**
**DK-2950 Vedbaek (DK)**

(74) Representative: **Carpmael, John William Maurice et al,**
**CARPMAELS & RANSFORD 43 Bloomsbury Square**
**London, WC1A 2RA (GB)**

## A method of recovering heat from waste water in a purifying plant and a purifying plant for carrying out the method.

This invention relates to a method of recovering heat from waste water which is supplied at a variable rate to a purifying plant comprising at least two receptacles connected for successive treatment of the waste water, and a heat exchanger connected to the plant outlet for purified waste water.

In purifying plants with heat recovery, e.g. by means of a heat pump, the evaporator of which is heated by the clarified waste water, there is a need for equalizing fluctuations of the inflow rate of the waste water and hence of the available amount of heat. Said fluctuations can be rather considerable, in particular in plants for purifying municipal sewage where the maximum water flow during the day hours can be several times larger than the minimum flow of water which normally occurs in the night hours.

In order to obtain a certain equalizing of such diurnal variations in a biological purifying plant with associated heat pump it has been suggested that clarified waste water should be supplied to the evaporator of the heat pump at a constant rate corresponding to 80—100% of the average diurnal value, and that the fraction of the water flow through the evaporator, which during periods of low load exceeds the inflow to the purifying plant, should be recirculated to the final clarification or settling tank of the plant. With this method the heat pump operates at full capacity day and night, but in turn the recirculation of cooled waste water from the heat pump to the final clarification tank during periods of low load results in a continuous cooling of the water within the tank and hence a continuously decreasing water temperature at the inlet of the evaporator of the heat pump. This temperature drop causes a noticeable reduction of the thermal efficiency and, hence, of the economy of the heat pump, and it increases the risk of frost bursts within the heat pump, especially during the cold season.

It is an object of the present invention to provide a method which permits equalization of fluctuations in the inflow rate of the waste water and hence a higher utilization of the heat content of the waste water, without involving the disadvantages pointed out above. The method is characterized in that during periods of low inflow to the plant, inflowing waste water is caused to by-pass one of the receptacles, and water from that receptacle is conducted into the through-flowing water flow upstream of at least one other of the receptacles.

During periods of low inflow said receptacle in the purifying plant functions as a reservoir in that when its content is drawn off and returned to the flow of water through the other receptacle or receptacles and the heat exchanger, the total amount of water present in the plant is gradually reduced and in this way a flow through the heat exchanger exceeding the inflow to the purifying plant is maintained. Since the water is drawn off at the water temperature prevailing in the receptacle, the addition of that water to the flow through the heat exchanger in which the waste water gives off heat does not result in any cooling of this flow with the above-mentioned concomitant disadvantages and risks of freezing in the heat exchanger. A further advantage of the invention is that a periodic complete emptying of said receptacle permits a correspondingly frequent cleaning of the receptacle by flushing, e.g. with purified water from the outlet of the heat exchanger, before the supply of waste water to the receptacle is reassumed. In this way it is easier to keep the receptacle clean because it can be flushed at short intervals as part of the normal operation of the plant.

From said one receptacle the water may be conducted into the flow of waste water at the inlet of the plant. For this purpose a sludge pump, which normally will form part of a plant of the type referred to for drawing sludge from the bottom of the receptacle, can be used without the risk of clogging of the heat exchanger by sludge because the sludge will settle in the remaining receptacle or receptacles of the plant.

A preferred embodiment of the method is characterized in that the waste water is treated in two series- or parallel-connected clarification receptacles located downstream of an upstream aeration receptacle, and that during periods of low inflow alternately one and then the other clarification receptacle is isolated by closing the inlet thereto, following which the content of the isolated receptacle is pumped into the flow through the plant. The clarifier section will generally be that part of the plant which has the largest volume, and by employing this section as reservoir a relatively large amount of water is available for equalizing fluctuations in the inflow rate of the waste water. Since in most plants the efficiency of the purifying increases with decreasing throughflow of water, no serious danger results from switching off one clarifying receptacle during periods in which the inflow of waste water is below average and thus considerably lower than the maximum for which the plant is dimensioned.

The invention also relates to a purifying plant for carrying out the method and comprising at least two receptacles connected for successively treating the waste water and a heat exchanger connected to the plant outlet. The plant is characterised by comprising means for isolating one of said receptacles and for establishing a conduit by-passing the isolated receptacle, and means for transferring water from the isolated receptacle to a location of the plant upstream of at least one other of said receptacles.

The invention will now be described in more detail with reference to the purely schematical drawing, in which:

FIG. 1 illustrates an embodiment of a biological purifying plant according to the invention and having two series-connected receptacles in which final clarification or settling takes place, and

FIG. 2 illustrates a purifying plant according to the invention and having two parallel-connected final clarification or settling receptacles.

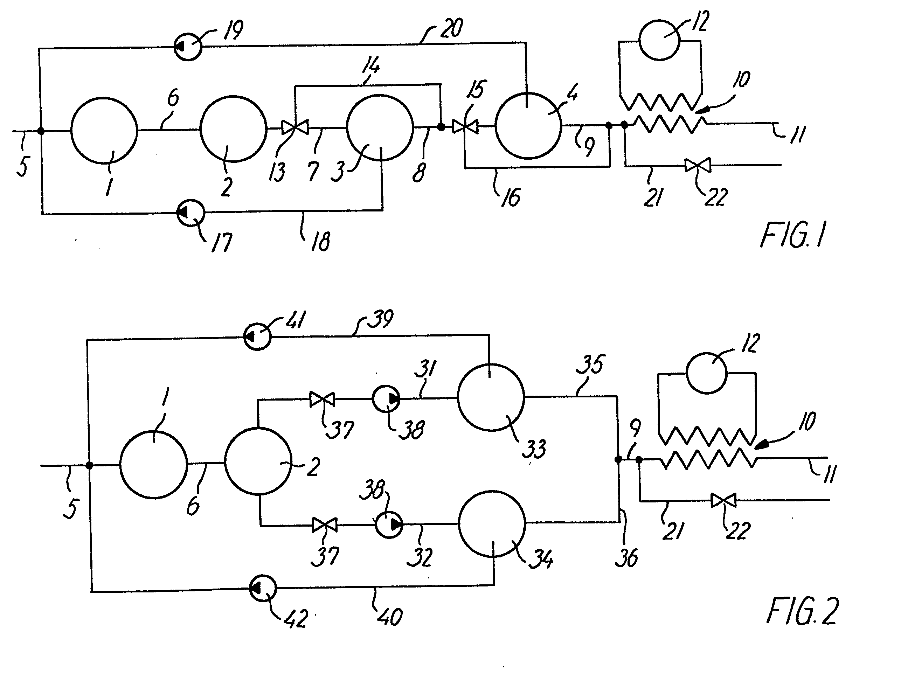

The plant shown in Fig. 1 comprises two series-connected pre-treatment receptacles, one in the form of a primary settling receptacle 1, and the other in the form of an aerating receptacle 2, and two series-connected receptacles 3 and 4 in which final clarification or settling takes place. Receptacles 1—4 which are all series-connected, may, according to circumstances, be constructed as closed tanks or open ponds. Waste water is supplied to receptacle 1 through a conduit 5, if desired subsequent to a preceding coarse screening in a sand trap or a grating. From receptacle 1 pre-clarified waste water flows through a conduit 6 to receptacle 2 wherein air, or possibly pure oxygen, may be added to the waste water, in a manner known per se.

Receptacles 2 and 3 are connected through a conduit 7, and receptacles 3 and 4 are connected through a conduit 8. An outlet conduit 9 from receptacle 4 carries clarified waste water to a heat exchanger 10, the discharge conduit 11 of which opens into a receiving stream, not shown. Heat exchanger 10 may be an evaporator of a schematically shown heat pump 12, which raises the temperature of a working medium evaporated in the heat exchanger to a value suitable for utilization of the heat, e.g. in a district heating system.

A three-way valve 13 is included in conduit 7 and to its three ports are connected the upstream and downstream portions of conduit 7 and the upstream end of a by-pass conduit 14, respectively. The downstream end of conduit 14 is connected to conduit 8. Dependent on the setting of valve 13 water from receptacle 2 flows either into receptacle 3 or, by-passing that receptacle, into conduit 8. Downstream of the connection between conduits 8 and 14 a similar three-way valve 15 is included in conduit 8. Dependent on the setting of valve 15 it connects the upstream portion of conduit 8 — and conduit 14 — either with receptacle 4 or with a conduit 16 by-passing receptacle 4 and connected to outlet conduit 9 upstream of heat exchanger 10.

A sludge pump 17 is located in a return conduit 18 leading from the bottom zone of receptacle 3 back to inlet conduit 5, and a corresponding sludge pump 19 is included in a return conduit 20 from the bottom zone of receptacle 4 to inlet conduit 5.

A conduit 21, which as shown may include a stop valve 22 connects outlet conduit 9 with the receiving stream. Through conduit 21 that part of the water flow in conduit 9, which exceeds the capacity of heat exchanger 10, may be discharged directly from the plant.

During periods, in which the inflow of waste water through conduit 5 is equal to or higher than the capacity of heat exchanger 10, the two three-way valves 13 and 15 are set such that the entire inflow of waste water flows in series through the four receptacles, 1, 2, 3, and 4. In periods of less inflow of waste water one valve, e.g. valve 13, is switched such that the waste water flows directly from aerating receptacle 2 through by-pass conduit 14 into receptacle 4. Simultaneously, water from the isolated receptacle 3 is pumped, by means of sludge pump 17, back to conduit 5 for supplementing the inflow of waste water. If the delivery rate of the pump is variable, it can be adjusted such that waste water arrives at the inlet of heat exchanger 10 at a constant or substantially constant flow rate during emptying of receptacle 3. After emptying of receptacle 3 a flushing of the receptacle may be carried out, e.g. by means of water derived from conduit 11, and after pump 17 has been stopped, the receptacle may subsequently be filled up by water from conduit 11 before valve 13 is once more switched to connect receptacles 2 and 3 so that the inflowing waste water flows in series through both receptacles 3 and 4. Alternatively, the receptacle 3 may, after the pump has been stopped, be filled up by water from receptacle 2 if valve 13 is designed such that it can assume intermediate positions in which the outlet of receptacle 2 communicates both with receptacle 3 and with by-pass conduit 14.

Next time the inflow to the purifying plant drops below the previously mentioned value corresponding to the capacity of heat exchanger 10, receptacle 4 is isolated by means of valve 15 and emptied by means of sludge pump 19. In this way receptacles 3 and 4 will alternately be emptied, flushed and refilled, normally every second night when the inflow of waste water is below average.

The purifying plant illustrated in Fig. 2 is in principle constructed and functioning in the same way as that shown in Fig. 1 with the one exception that the two receptacles, in which final clarification or settling occurs and which are to be alternately put out of operation and emptied into the plant inlet, are connected in parallel. Those components of the plant, which are identical with those shown in Fig. 1, have been assigned same reference numerals and will not be described in detail.

From aerating receptacle 2 two overflow conduits 31 and 32 lead to one each of the two final clarification receptacles 33 and 34 whose outlet conduits 35 and 36, which may be designed as weirs, merge into a common outlet conduit 9 connected to the inlet of heat exchanger 10. Each of the conduits 31 and 32 includes a stop valve 37 and a pump 38. Return conduits 39 and 40 with sludge pumps 41 and 42 therein extend from receptacles 33 and 34 back to inlet conduit 5.

During periods of ample inflow of waste water both valves 37 are open so that the waste water flows in parallel through both receptacles 33 and 34 before being discharged from the purifying plant. When the inflow drops below the value corresponding to the capacity of heat exchanger 10, one valve 37 is closed, e.g. that connected to receptacle 33 which is then emptied by means of the associated sludge pump 41. The final clarification of the waste water then occurs solely in receptacle 34 which, however, processes both the inflowing waste water and the water recirculated from receptacle 33 through conduit 39. When receptacle 33 has been emptied one may proceed as described above for cleaning and refilling the receptacle before clarified waste water is once more discharged therefrom to outlet conduit 9.

, It will be appreciated that pumps 38 are necessary only if the waste water is unable to flow by itself from aerating receptacle 2 to final clarification receptacles 33 and 34, and that where required a similar pump might be included in conduit 7 of Fig. 1 between receptacle 2 and valve 13.

It will be appreciated that the systems described above may be modified in various ways within the scope of the invention, e.g. if the purifying plant comprises more than two series- or parallel-connected final clarification receptacles or other receptacles suitable for use as a reservoir for equalizing variations in the inflow rate of the waste water. The system may also readily be modified for use in purifying plants comprising several complete and parallel-connected process lines for purifying the waste water. The system is not bound to purifying plants of any particular type, such as biological plants. In plants with only one final clarification receptacle downstream of an upstream treatment vessel it will generally be permissible to pump the contents of that receptacle back to the plant inlet and let the through-flowing waste water bypass the receptacle in periods of low load, in particular during night hours where a lower purification efficiency can often be tolerated.

## Claims

1. A method of recovering heat from waste water which is supplied at a variable rate to a purifying plant comprising at least two receptacles for successive treatment of the waste water, and a heat exchanger connected to the plant outlet for purified waste water, charac-rised in that during periods of low inflow to the plant, inflowing waste water is caused to by-pass one of the receptacles and water from that receptacle is conducted into the through-flowing water flow upstream of at least one other of said receptacles.

2. A method as claimed in claim 1 characterised in that from said one receptacle the water is conducted into the flow of waste water at the inlet of the plant.

3. A method as claimed in claim 1 or 2 characterised in that during periods of high inflow the waste water is treated in at least one pre-treatment receptacle (1 or 2) followed by two series-connected clarification receptacles (3, 4), and that during periods of low inflow alternately one and the other clarification receptacle (3, 4) is isolated by closing the inlet thereto, following which the content of the isolated receptacle (3 or 4) is pumped into the flow through the plant upstream of the other clarification receptacle (4 or 3).

4. A method as claimed in claim 1 or 2 characterised in that during periods of high inflow the waste water is treated in at least one pre-treatment receptacle (1 or 2) followed by two parallel-connected clarification receptacles (33, 34), and that during periods of low inflow alternately one and the other clarification receptacle (33, 34) is isolated by closing the inlet thereto, following which the content of the isolated receptacle (33 or 34) is pumped into the flow through the plant upstream of the other clarification receptacle (34 or 33).

5. A purifying plant for carrying out the method as claimed in any of claims 1—4, and comprising at least two receptacles connected for successively treating the waste water and a heat exchanger (10) connected to the plant outlet (9), characterised by means (13, 15, 37) for isolating one of said receptacles (3, 4, 33, 34) and for establishing a conduit by-passing the isolated receptacle, and means (17, 19, 41, 42) for transferring water from the isolated receptacle to a location of the plant upstream of at least one other of said receptacles.

6. A plant as claimed in claim 5 characterised in that it comprises at least one pre-treatment receptacle (1, 2) and two series-connected clarification receptacles (3, 4) intermediate the pre-treatment receptacle and the heat exchanger (10), and in that associated with each clarification receptacle there is provided a conduit (14, 16) by-passing the receptacle, valve means (13, 15) in the by-pass conduit and in the inlet to the receptacle, and a suction conduit (18, 20) connecting the receptacle with a pump (17, 19), the discharge conduit of which opens upstream of the other clarification receptacle.

7. A plant as claimed in claim 5 characterised in that it comprises at least one pre-treatment receptacle (1, 2) and two parallel-connected clarification receptacles (33, 34) intermediate the pre-treatment receptacle and the heat exchanger (10), in that valve means (37) are provided between the pre-treatment receptacle and each clarification receptacle, and in that there is associated with each clarification receptacle a suction conduit (39, 40) connecting the receptacle with a pump (41, 42), the discharge conduit of which opens upstream of the other clarification receptacle.

8. A plant as claimed in claim 6 or 7 characterised in that the discharge conduits of said pumps (17, 19, 41, 42) open upstream of said at least one pre-treatment receptacle (1, 2).

## Patentansprüche

1. Verfahren zur Wärmerückgewinnung aus Abwasser, das in einem variablen Mengenstrom einer Reinigungsanlage zugeführt wird, die wenigstens zwei Behälter zum sukzessiven Behandeln des Abwassers und einen an den Austritt der Anlage für gereinigtes Abwasser angeschlossenen Wärmetauscher umfasst, dadurch gekennzeichnet, dass in Perioden mit geringer Zufuhr zur Anlage einströmendes Abwasser um einen der Behälter herumgeleitet und Wasser aus diesem Behälter auf der Anströmseite wenigstens eines der anderen der genannten Behälter in den durch die Anlage hindurchströmenden Wasserstrom eingeleitet wird.

2. Verfahren nach Anspruch 1, dadurch gekennzeichnet, dass das Wasser aus dem genannten einen Behälter am Eintritt der Anlage in den Abwasserstrom eingeleitet wird.

3. Verfahren nach Anspruch 1 oder 2, dadurch gekennzeichnet, dass in Perioden mit starker Zufuhr das Abwasser in wenigstens einem Vorbehandlungsbehälter (1 oder 2) und zwei auf diesen folgenden, in Serie geschalteten Klärbehältern (3, 4) behandelt wird und dass in Perioden mit geringer Zufuhr abwechselnd der eine und der andere Klärbehälter (3, 4) durch Schliessen seines Eintritts abgesperrt und dann der Inhalt des abgesperrten Behälters (3 oder 4) auf der Anströmseite des jeweils anderen Klärbehälters (4 oder 3) in den durch die Anlage hindurchströmenden Wasserstrom hineingepumpt wird.

4. Verfahren nach Anspruch 1 oder 2, dadurch gekennzeichnet, dass in Perioden mit starker Zufuhr das Abwasser in wenigstens einem Vorbehandlungsbehälter (1 oder 2) und zwei auf diesen folgenden, parallel geschalteten Klärbehältern (33, 34) behandelt wird un dass in Perioden mit geringer Zufuhr abwechselnd der eine und der andere Klärbehälter (33, 34) durch Schliessen seines Eintritts abgesperrt und dann der Inhalt des abgesperrten Behälters (33 oder 34) auf der Anströmseite des jeweils anderen Klärbehälters (34 oder 33) in den durch die Anlage hindurchströmenden Wasserstrom hineingepumpt wird.

5. Reinigungsanlage zur Ausübung des Verfahrens nach einem der Ansprüche 1—4 und mit wenigstens zwei zum sukzessiven Behandeln des Abwassers geschalteten Behältern sowie einem an den Austritt (9) der Anlage angeschlossenen Wärmetauscher (10), gekennzeichnet durch Mittel (13, 15, 37) zum Absperren eines der genannten Behälter (3, 4, 33, 34) und Herstellen einer den abgesperrten Behälter umgehenden Leitung sowie durch Mittel (17, 19, 41, 42) zum Überführen von Wasser aus dem abgesperrten Behälter zu einer auf der Anströmseite wenigstens eines anderen der genannten Behälter befindlichen Stelle in der Anlage.

6. Anlage nach Anspruch 5, dadurch gekennzeichnet, dass sie wenigstens einen Vorbehandlungsbehälter (1, 2) und zwei in Serie geschaltete Klärbehälter (3, 4) zwischen dem Vorbehandlungsbehälter und dem Wärmetauscher (10) umfasst und dass in Verbindung mit jedem Klärbehälter eine diesen Behälter umgehende Leitung (14, 16), Absperrmittel (13, 15) in der Umgehungsleitung und im Eintritt des Behälters sowie eine Saugleitung (18, 20) vorgesehen sind, welche letztere den Behälter mit einer Pumpe (17, 19) verbindet, deren Druckleitung auf der Anströmseite des anderen Klärbehälters mündet.

7. Anlage nach Anspruch 5, dadurch gekennzeichnet, dass sie wenigstens einen Vorbehandlungsbehälter (1, 2) und zwei parallel geschaltete Klärbehälter (33, 34) zwischen dem Vorbehandlungsbehälter und dem Wärmetauscher (10) umfasst, dass Absperrmittel (37) zwischen dem Vorbehandlungsbehälter und jedem Klärbehälter vorgesehen sind und dass in Verbindung mit jedem Klärbehälter eine Saugleitung (39, 40) vorgesehen ist, die den Behälter mit einer Pumpe (41, 42) verbindet, deren Druckleitung auf der Anströmseite des anderen Klärbehälters mündet.

8. Anlage nach Anspruch 6 und 7, dadurch gekennzeichnet, dass die Druckleitungen der genannten Pumpen (17, 19, 41, 42) auf der Anströmseite des genannten, wenigstens einen Vorbehandlungsbehälters (1, 2) münden.

## Revendications

1. Procédé pour la récupération de chaleur à partir d'eau résiduaire fournie sous débit variable à une installation de purification comprenant au moins deux récipients de traitement successif de l'eau résiduaire et un échangeur de chaleur relié à la sortie d'eau résiduaire purifiée de l'installation, caractérisé en ce que pendant des périodes à faible débit d'entrée vers l'installation, l'on fait circuler l'eau résiduaire entrante en dehors de l'un des récipients et l'on amène l'eau de ce récipient au courant d'eau en circulation, en amont d'au moins un autre desdits récipients.

2. Procédé selon la revendication 1, caractérisé en ce que l'eau provenant dudit récipient est amenée dans le courant d'eau résiduaire à l'entrée de l'installation.

3. Procédé selon la revendication 1 ou la revendication 2, caractérisé en ce que durant des périodes à débit important d'entrée, l'eau résiduaire est traitée dans au moins un récipient de pré-traitement (1 ou 2) suivi de deux récipients de clarification (3, 4) branchés en série et que durant des périodes à faible débit d'entrée l'on isole alternativement l'un et l'autre récipient de clarification (3, 4) par fermeture de son entrée, après quoi le contenu du récipient isolé (3 ou 4) est pompé dans le courant circulant à travers l'installation, en amont de l'autre récipient de clarification (4 ou 3).

4. Procédé selon la revendication 1 ou la revendication 2, caractérisé en ce que durant des périodes à débit important d'entrée, l'eau résiduaire est traitée dans au moins un récipient de pré-traitement (1 ou 2) suivi de deux récipients de clarification (33, 34) branchés en parallèle et que durant des périodes à faible débit d'entrée, l'on isole alternativement l'un et l'autre récipient de clarification (33, 34) par fermeture de son entrée, après quoi le contenu de récipient isolé (33 ou 34) est pompé dans le courant circulant à travers l'installation, en amont de l'autre récipient de clarification (34 ou 33).

5. Installation de purification pour la mise en oeuvre du procédé selon l'une quelconque des revendications 1 à 4 et comportant au moins deux récipients branchés pour successivement traiter l'eau résiduaire et un échangeur de chaleur (10) branché à la sortie (9) de l'installation, caractérisée par des moyens (13, 15, 37) pour isoler un desdits récipients (3, 4, 33, 34) et pour établir une conduite de dérivation hors du récipient isolé, et des moyens (17, 19, 41, 42) pour transférer l'eau du récipient isolé en un point de installation, en amont d'au moins un autre desdits récipients.

6. Installation selon la revendication 5, caractérisée en ce qu'elle comprend au moins un récipient de pré-traitement (1, 2) et deux récipients de clarification (3, 4) branchés en série entre le récipient de pré-traitement et l'échangeur de chaleur (10) et en ce que en liaison avec chaque récipient de clarification il y a une conduit (14, 16) de dérivation hors du récipient, des vannes (13, 15) dans la conduite de dérivation et dans l'entrée au récipient et une conduite d'aspiration (18, 20) reliant le récipient à une pompe (17, 19) dont la conduite de refoulement débouche en amont de l'autre récipient de clarification.

7. Installation selon la revendication 5, caractérisée en ce qu'elle comprend au moins un récipient de pré-traitement (1, 2) et deux récipients de clarification (33, 34) branchés en parallèle entre le récipient de pré-traitement et l'échangeur de chaleur (10), en ce que des vannes (37) sont prévues entre le récipient de pré-traitement et chaque récipient de clarification et en ce que en liaison avec chaque récipient de clarification il y a une conduite d'aspiration (39, 40) reliant le récipient à une pompe (41, 42) dont la conduite de refoulement débouche en amont de l'autre récipient de clarification.

8. Installation selon la revendication 6 ou la revendication 7, caractérisé en ce que les conduites de refoulement desdites pompes (17, 19, 41, 42) débouchent en amont d'au moins un desdits récipients de pré-traitement (1, 2).

FIG.1

FIG.2

0 008 176